# EUROPEAN PATENT SPECIFICATION

(11) **EP 1 133 858 B1**
(45) Date of publication and mention of the grant of the patent: **30.06.2004**
(21) Application number: 99961782.2
(22) Date of filing: 23.11.1999
(51) Int. Cl.: H04L 27/26

(54) **BIT ALLOCATION AMONG CARRIERS IN MULTICARRIER COMMUNICATIONS**
BITZUORDNUNG ZWISCHEN TRÄGERN FÜR MEHRTRÄGERKOMMUNIKATIONSSYSTEME
AFFECTATION DE BITS A DES ONDES PORTEUSES DANS DES COMMUNICATIONS A ONDES PORTEUSES MULTIPLES

(30) Priority: 25.11.1998 US 109876 P
(43) Date of publication of application: 19.09.2001
(73) Proprietor: AWARE, INC., Bedford, MA 01730 (US)
(72) Inventor: SHAPIRO, Jerome, M., Belmont, MA 02478 (US); SANDBERG, Stuart, D., Arlington, MA 02174 (US); TZANNES, Marcos, C., Orinda, CA 94563 (US)
(74) Representative: Rupprecht, Kay, Dipl.-Ing.
(86) International application number: PCT/US1999/027798
(87) International publication number: WO 2000/031940

(56) References cited:
- EP-A- 0 703 685
- EP-A- 0 812 087
- US-A- 4 731 816
- US-A- 5 596 604
- US-A- 5 822 372

## Description

### BACKGROUND OF THE INVENTION

### FIELD OF THE INVENTION

The Invention relates to communication systems and, more particularly, to the transmission of information using multicarrier transmission techniques wherein symbol-oriented error correction is employed, as set forth in independent claims 1, 23 and 30.

### BRIEF DESCRIPTION OF RELATED PRIOR ART

The public switched telephone network (PSTN) provides the most widely available form of electronic communication for most individuals and businesses. Because of its ready availability and the substantial cost of providing alternative facilities, it is increasingly being called upon to accommodate the expanding demands for transmission of substantial amounts, of data at high rates.

Structured originally to provide voice communication with its consequent narrow bandwidth requirements, the PSTN increasingly relies on digital systems to meet the service demand.

A major limiting factor in the ability to implement high rate digital transmission has been the subscriber loop between the telephone central office (CO) and the premises of the subscriber. This loop most commonly comprises a single pair of twisted wires which are well suited to carrying low-frequency voice communications for which a bandwidth of 0-4 kHz is quite adequate, but which do not readily accommodate broadband communications (i.e., bandwidths on the order of hundreds of kilohertz or more) without adopting new techniques for communication.

One approach to this problem has been the development of discrete multitone digital subscriber line (DMT DSL) technology. In this approach to communications over the local subscriber loop between the central office and the subscriber premises, data to be transmitted is modulated onto a multiplicity of discrete frequency carriers which are summed together and then transmitted over the subscriber loop. Individually, the carriers effectively form subchannels that are separated from each other in frequency by a relatively small amount, but which collectively form what is effectively a broad bandwidth communications channel. At the receiver end, the carriers are demodulated and the data recovered.

Communication using such technology is by way of "frames" of data and control information. In a presently-used form of asymmetric digital subscriber line ("ADSL") communications, sixty eight data frames and one synchronization frame form a "superframe" that is repeated throughout the transmission. The data frames carry the data that is to be transmitted; the synchronization or "sync" frame provides a known bit sequence that is used to synchronize the transmitting and receiving modems and that also facilitates determination of transmission subchannel characteristics such as signal-to-noise ratio ("SNR"), among others.

A superframe is 17 milliseconds in duration. A frame is effectively 250 microseconds in duration (or conversely, the frame rate is approximately 4 kHz) and is made up of a collection of bytes.

The bits comprised in each frame and superframe are transmitted over the subchannels. The number of bits carried on each subchannel (i.e., the "bit loading") during each data symbol or data block transmission period is determined by transmitting a reference signal over the subchannels and measuring the characteristics of the subchannel, typically, the signal to noise ratio, based on this. The bit loading may vary from one subchannel to another, depending on the signal-to-noise ratio of the particular channels. The loading information is typically calculated at the receiving end of the subscriber line (e.g., at the subscriber premises in the case of transmission from the central office to the subscriber) and is communicated to the other end. It is stored at both ends in the form of at least one "bit-loading table" that thereby defines the communications over the channel.

The maximum amount of information that can be encoded onto a particular subcarrier is a function of the signal to noise ratio of the communication channel with respect to that subcarrier. The signal to noise ratio of a communication channel can vary according to frequency so that the maximum amount of information that can be encoded onto one carrier may be different from the maximum amount of information that can be encoded onto another carrier.

A bit loading algorithm provides at least one bit allocation table that indicates the amount of information (in bits) that is to be encoded on each of the carriers. That is, for a multicarrier communication system with J carriers, a bit allocation table B[j] indicates, for each j = 1 to J, the amount of information that is to be encoded onto each of the J carriers.

Shaping the transmission to match the channel characteristics is known. For example, a technique known as "water pouring" was introduced by Gallager in 1968 ("Information Theory and Reliable Communication", page 389) and by Wozencraft in 1965 ("Principles of Communication Engineering", pp. 285-357). Water pouring involves distributing the energy of the transmission signal according to the channel frequency response curve (a plot of the signal to noise ratio as a function of frequency). The frequency response curve is inverted and the available signal energy (the "water") is "poured" into the inverted curve so that more of the energy is distributed into those portions of the channel having the highest signal to noise ratio. In a multicarrier system in which the transmission band is divided into numerous subchannels, throughput can be maximized by putting as many bits in each subcarrier as can be supported given the "water pouring" energy and a desired error rate.

Other techniques for allocating bits among carriers of a multicarrier signal are known. For example, U.S. Patent No. 4,731,816 to Hughes-Hartogs discloses a bit loading scheme where one bit at a time is incrementally added to each subcarrier until a maximum rate is achieved. Subcarriers that require the least amount of additional power to support an additional bit are selected first.

Another example is disclosed in U.S. Patent No. 5,479,477 to Chow et al. More specifically, Chow et al. discloses a bit loading scheme that is capable of either maximizing the throughput or maximizing the margin for a particular target data rate. Unlike Hughes-Hartogs, Chow et al. determines the bit loading table one carrier at a time (rather than one bit at a time). In Chow et al., all the carriers are sorted in descending order according to the measured signal to noise ratio. The initial subchannels that are selected are the ones capable of carrying the most bits. Using the Chow et al. scheme to maximize the data rate provides a bit loading table similar to that provided by the Hughes-Hartogs algorithm.

Another conventional technique is disclosed in U.S. Patent No. 5,596,604 to Cioffi et al. In pertinent part, Cioffi et al. discloses that in order to address problems of noise-related errors in the communications system, forward error correction coding (FECC) and interleaving techniques may be implemented. Accordingly to these techniques, an input data block to be transmitted is augmented with parity data so as to constitute a codeword and so as to enable errors in the block to be detected and corrected. Codewords may be interleaved for transmission to reduce the effect of error bursts on individual code words.

Cioffi et al. teaches that there may exist a trade-off between high reliability, which requires effective error correction and immunity to noise, and short transmission delays. That is, Cioffi et al. teaches that by increasing the periods over which interleaving is effected, the system may be made to exhibit greater immunity to impulse noise, but this may come at the cost of greater transmission delays. In order to try to improve this trade-off situation, Cioffi et al. proposes applying FECC coding and codeword interleaving differently to input signals from different channels to produce encoded data signals having different reliabilities and different coding delays. Bits of encoded data signals having relatively less delay are allocated to carriers that are subject to relatively more attenuation and/or channel noise. This is said to permit each signal to be transmitted in accordance with an individually selected compromise between high reliability and short transmission delay. The US- Patent application US-A-5822372 further discloses a multicarrier transmission system where the input data stream is segmented into multiple substreams, each having a different error protection. requirement, and assigned to the subcarriers accordingly. Each subcarrier is allocated an amount of the available power according to the error protection requirements without mapping data bits into error correction symbols.

Thus, in multicarrier communications, it is known to utilize FECC coding techniques (e.g. Reed Solomon coding) that are symbol based, whereby to enable the receiver to detect and correct errors in the received FECC symbols. However, depending upon the type of error correction coding methodology employed and the manner in which bit loading is performed, certain problems may arise in multicarrier communications. For example, according to the prior art, bit loading is carried out such that bits are loaded into the channels or subchannels (collectively or singly referred to hereafter as "channels") from a serial input bit stream, in ascending channel order or increasing constellation size, without regard to whether the bits assigned to any given channel during a given transmission period are comprised in more than one FECC symbol. As can be readily appreciated, given these types of bit loading schemes, it is common for bits from multiple FECC symbols to be assigned to a single channel in a given transmission period. As mentioned above, FECC codes map the serial input bit stream to codewords that are a collection of FECC symbols, where an FECC symbol is composed of a finite number of bits (e.g. one byte). The codeword also contains FECC parity symbols, which are overhead symbols that are added to the bit stream to provide the error correction capability at the receiver. The FECC codewords are constructed in such a way so as to enable the receiver to correct a certain number of FECC symbols that are received in error. The number of symbols that can be corrected by a given FECC code is known as the "correction capability" of the code.

When such symbol-oriented coding and bit loading are employed, an error on a single channel may cause errors to be introduced into multiple FECC symbols; unfortunately, this weakens the power of the FECC code since the code can only correct a fixed maximum number of FECC symbols received in error, and a single channel error that produces multiple symbol errors wastefully uses up the correction capability of the FECC code. It would be desirable to reduce the number of FECC symbols received in error that result from a single channel error, and to thereby increase the efficiency of error correction in multicarrier communications using such symbol-oriented error correction methodologies.

### SUMMARY OF THE INVENTION

Accordingly, the present invention provides a technique that may be employed in multicarrier communications to improve the efficiency of error correction using symbol-oriented error correction methodologies, by reducing the number of symbol errors (e.g., FECC symbol errors) that result from individual channel errors. More specifically, in the technique of the present invention, bits from the symbols are allocated among the channels in such a way as to minimize the number of respective channels that are allocated bits belonging to more than one respective symbol during a respective transmission period. As will be appreciated by those skilled in the art, if the error correction code methodology being employed in the communications is symbol-oriented, then the likelihood of errors being correctable increases if single channel errors result in fewer symbols being received in error. Thus, since in the present invention, the number of channels that are assigned respective bits from more than one respective symbol during a respective transmission period is minimized, the likelihood that an error on a given channel during that transmission period will introduce errors into more than one symbol is reduced compared to the prior art. Thus, according to the present invention, it is more likely, compared to the prior art, that channel errors will be correctable. Advantageously, this permits multicarrier communications according to the present invention to exhibit improved error correction and data communication efficiency compared to the prior art.

In one embodiment of the present invention which is used to advantage in a multicarrier data modulation method, a plurality of carrier signals are provided for use in modulating data bit signals of a serial input data stream. The data bit signals are mapped to FECC symbols, with each symbol containing a finite number of bit signals. Each FECC symbol may have a respective size of one byte. Each carrier signal is associated with a respective transmission channel. The bit signals are allocated among the carrier signals for modulation using the carrier signals. The allocating of the bit signals among the carrier signals is carried out in such a way as to minimize the number of respective carrier signals that are allocated bit signals belonging to more than one respective symbol during a respective transmission period (e.g., a bit loading period). The bit signals are then modulated using the carrier signals.

In this embodiment, respective bit signals allocated to respective carrier signals may be comprised in a single respective symbol. The allocation of the bit signals among the carrier signals may comprise both determining respective maximum numbers of bit signals that may be transmitted via the respective channels without exceeding a desired maximum probability of bit transmission error and determining respective actual numbers of bit signals to be transmitted via the respective channels based upon the respective maximum numbers and such that the number of respective channels that are allocated bit signals belonging to more than one respective symbol is minimized or such that each respective channel only transmits respective bits belonging to a single respective symbol during the respective transmission period.

Alternatively, or in conjunction with the foregoing, the allocating of the bit signals among the carrier signals may comprise determining respective maximum numbers of bit signals that may be transmitted via the respective channels without exceeding a desired maximum probability of bit transmission error. The respective maximum numbers of bit signals may be allocated to the carrier signals in accordance with a carrier signal allocation sequence order. The sequence order may be such that the number of respective carrier signals that are allocated bit signals belonging to more than one respective symbol is minimized or such that each respective channel only transmits respective bits belonging to a single respective symbol during the respective transmission period.

Further alternatively, or in conjunction with the foregoing, the allocating of the bit signals among the carrier signals may comprise adjusting a transmission gain of at least one channel so as to change to a different number of bit signals a maximum number of bit signals that can be transmitted via the at least one channel without exceeding a desired maximum probability of bit transmission error, and allocating an actual number of bit signals to the carrier signal associated with the at least one channel in accordance with the different number.

These and other features and advantages of the present invention will become apparent as the following Detailed Description proceeds and upon reference to the Figures of the Drawings, wherein:

### BRIEF DESCRIPTION OF THE DRAWINGS

Figure 1 is a schematic diagram of a DSL system wherein the present invention may be advantageously employed.
Figure 2 is a portion of a bit allocation table that may be stored in the memories of the transceivers of the system of Figure 1.

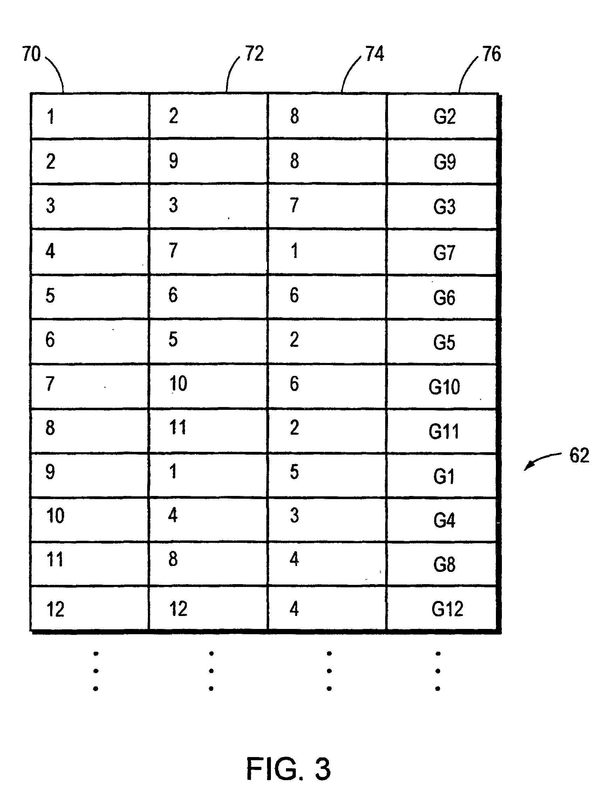

Figure *3 is a* portion of another bit allocation table that may be stored in the 10 memories of the transceivers of the system of Figure 1.
Figure 4 is a symbolic representation of a serial input data bit stream whose bit signals are mapped into a plurality of FECC symbols, which representation is used to describe features of embodiments of the present invention.

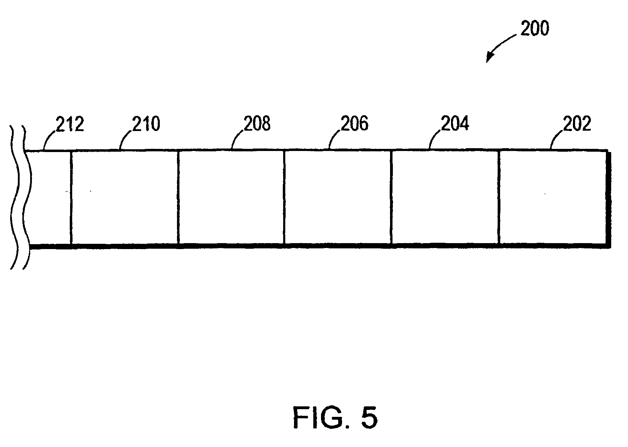

Figure 5 is a symbolic representation of another serial input data bit stream whose bit signals are mapped into a plurality of FECC symbols, which representation is used to describe features of embodiments of the present invention.

Although the following Detailed Description will proceed with reference being made to specific embodiments and methods of use, it is to be understood that the present invention is not intended to be limited to these embodiments and methods of use. Rather, as will be appreciated by those skilled in the art, many alternatives, modifications, and variations thereof are possible without departing from present invention.

### DETAILED DESCRIPTION OF ILLUSTRATIVE EMBODIMENTS

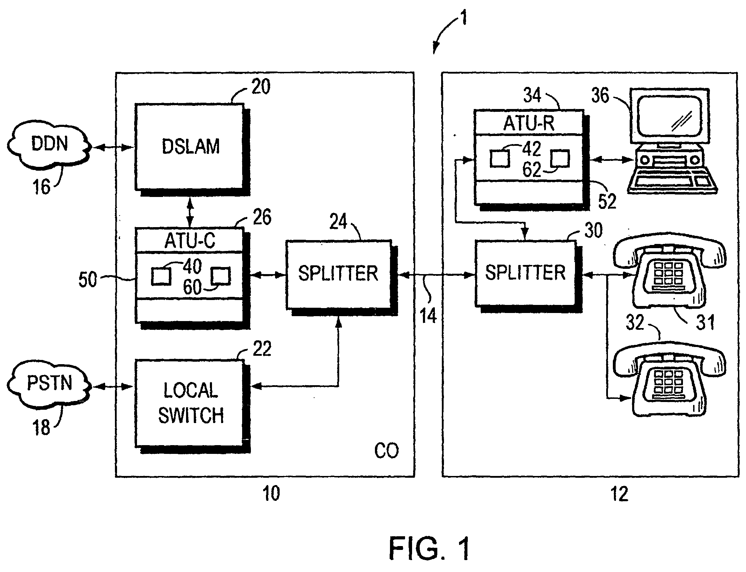

Figure 1 shows a DSL communications system wherein the present invention may be advantageously used. As shown in Figure 1, a telephone central office ("CO") 10 is connected to a remote subscriber 12 ("CP: Customer Premises") by a subscriber line or loop 14. Typically, the subscriber line 14 comprises a pair of twisted copper wires; this has been the traditional medium for carrying voice communications between a telephone subscriber or customer and the central office. Designed to carry voice communications in a bandwidth of approximately 4 kHz (kilohertz), its use has been greatly extended by DSL technology.

The central office is, in turn, connected to a digital data network ("DON") 16 for sending and receiving digital data, as well as to a public switched telephone network ("PSTN") 18 for sending and receiving voice and other low frequency communications. The digital data network is connected to the central office through a digital subscriber line access multiplexer ("DSLAM") 20, while the switched telephone network is connected to the central office through a local switch bank 20. The DSLAM 20 (or its equivalent, such as a data enabled switch line card) connects to a POTS "splitter" 24 through an ADSL transceiver unit-central office ("ATU-C") 26. The local switch 20 also connects to the splitter.

The splitter 24 separates data and voice ("POTS") signals received from the line 14. At the subscriber end of line 14, a splitter 30 performs the same function. In particular, the splitter 30 passes the POTS signals from line 14 to the appropriate devices such as telephone handsets 31, 32, and passes the digital data signals to an ADSL transceiver unit-subscriber ("ATU-R") 34 for application to data utilization devices such as a personal computer ("PC") 36 and the like. The transceiver 34 may advantageously be incorporated as a card in the PC itself; similarly, the transceiver 26 is commonly implemented as a line card in the multiplexer 20.

In this approach, the total communications bandwidth is divided into a multiplicity of channels, each a fraction of the total bandwidth. Each channel is associated with a respective carrier signal, and data to be transmitted from one transceiver via a respective channel to the other transceiver is modulated onto the respective channel using the respective carrier associated with the respective channel. Because of differing signal-to-noise ("SNR") characteristics of the channels, the maximum amount of data that can be effectively loaded differs among the channels. Accordingly, a respective "bit allocation table" 40, 42 is maintained at each transceiver to define the respective maximum numbers of bits that each may transmit on each respective channel, during each data transmission time period, to the transceiver to which it is connected.

The bit allocation tables 40, 42 are created during an initialization process which includes transmission of test signals in each of the channels by each transceiver to the other transceiver and measuring of signal to noise ratios (SNR) in each of the channels. The signals received at the respective transceivers are measured in order to determine the maximum numbers of bits that can be transmitted from one transceiver to the other in the respective channels via the particular line, given measured SNR of transmissions in the channels, without exceeding a predetermined bit transmission error rate probability (e.g., one bit error per every 10⁷ bits transmitted). The bit allocation table (e.g., 40) determined by a particular transceiver (e.g., 26) is then transmitted over the digital subscriber line 14 to the other transceiver (e.g., 34) for use by the other transceiver (e.g., 34) in accordance with this embodiment of the present invention.

It should be understood that each of the transceivers or modems 26, 34 comprises a respective processor (not shown), read only and random access memories (collectively referred to by numerals 50, 52, respectively), and transmitter and receiver circuitry blocks (not shown) which are interconnected via conventional bus circuitry (not shown), and are operable to permit the transceivers 26, 34 to carry out the DSL communications processes and the various other processes according to the present invention described herein. The read only and random access memories 50, 52 of these modems 26, 34 store program code instructions which are executable by the modems' processors, and when executed by the processors, cause the modems to carry out these processes. The memories 50, 52 also store the bit allocation tables 40, 42, respectively.

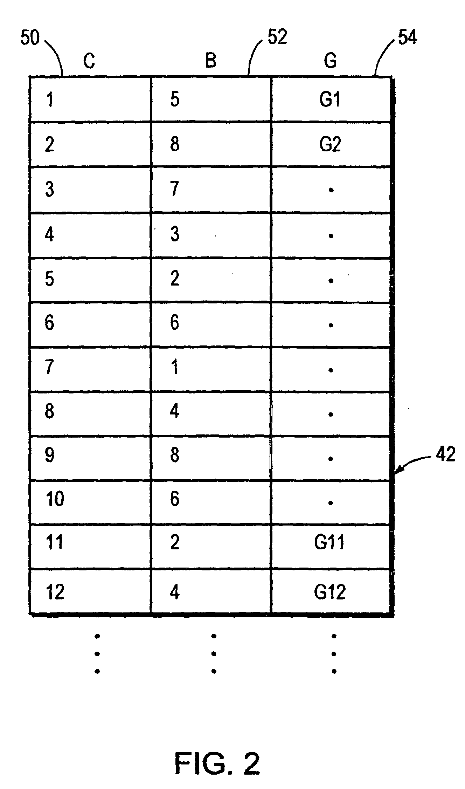

Referring now to Figure 2, one example of a construction of the bit allocation table 42 that is used in the customer premises equipment is shown in further detail. Table 40, used at the central office, is essentially the same in construction and operation as table 42, and therefore, will not further be described. In column 50, table 42 lists the available communications channels in system 1 by channel number. In a full-rate ADSL system, there are up to two hundred and fifty-six such subchannels, each of bandwidth 4.1 kHz. For example, in one embodiment of the invention, upstream communications (i.e., from the customer premises to the central telephone office) are conducted on a first set of the channels while downstream communications (from the central office to the customer premises) are conducted on a second, different set of channels, and a plurality of channels form a guard band between the upstream and downstream communications that may be used for signaling between the modems 26, 34. For purposes of simplicity of illustration, however, only twelve channels are shown in the table portion 42 of Figure 2.

As an alternative to this arrangement, the same channels may be used for transmission and reception by both transceivers, e.g. the upstream and downstream communications may both utilize channels 1-32 to transmit data. In this alternative there are more columns in table 42 for each communication direction.

For each channel ("C") in row 50, a field 52 defines the maximum number of bits ("B") that may be transmitted over that channel by the transmitter of a communications or modem pair, and received by the receiver of that pair, consistent with the prevailing conditions on the channel, e.g., measured signal-to-noise ratio (SNR), desired probability of error rate, and the corresponding gains G1, G2, etc. of column 54 assigned to the channels, etc. The table 42 specifies the respective maximum bit allocations using the transmission gains for each of the channels that transceiver 34 may use in transmitting "upstream" to the transceiver 26, also specifies the maximum bit allocations using the transmission gains for each of the channels that transceiver 34 may use in receiving transmissions from the transceiver 26. Transceiver 26 has a corresponding table 40 which is the mirror image of table 42, that is, the maximum bit allocations and gains specified for transmission by transceiver 34 are the same as those specified for reception by transceiver 26 and correspondingly for reception by transceiver 34 and transmission by transceiver 26.

In this embodiment of the invention, actual bit loading is performed using table 62 which comprises columns 70, 72, 74, and 76. The corresponding rows of columns 70 and 72 specify a sequence order (listed in column 70) in which the communication channels of system 1 (listed in column 72) are to be loaded with bits from the serial input data bit streams 100, 200 to be transmitted across link 14, and corresponding rows of column 74 and 76 specify the respective numbers of bits (listed in column 74) to be loaded into each of the channels listed in column 72 and the respective transmission gains (listed in column 76) that are to be used in transmitting the respective data bits via the respective channels. That is, during communications between the transceivers 26, 34, each of the transceivers 26, 34 transmits to the other transceiver bits comprised in a respective serial input data stream 100, 200, respectively. Data stream 100 is provided to modem 26 by DDN 16 via DSLAM 20; data stream 200 is provided to modem 34 from computer 36. Each of these serial data streams 100, 200 comprises a multiplicity of serial data bit signals mapped into respective FECC symbols 102, 104, 106, 108, 110, 112, etc. in the case of stream 100, and 202, 204, 206, 208, 210, 212, etc. in the case of stream 200; each of the FECC symbols is of the same size (e.g., one byte). During each data transmission time period, respective bits of serial bit streams 100, 200 are allocated and loaded into the respective channels in the sequence order and with the respective bit numbers specified in table 62.

For example, assuming that at least channels 1-12 are assigned to data communications from transceiver 26 to transceiver 34, during the first data transmission period, as specified in the first row of table 62, channel 2 is allocated the first 8 bits of the stream 100, and channel 9 is allocated the following 8 bits of the stream 100. Thereafter, channel 3 is allocated the next 7 bits of stream 100, and so forth. Bit signals from stream 200 are assigned to respective channels (not shown) for transmission of data from the transceiver 34 to the transceiver 26 in a similar fashion (i.e., in accordance with the sequence order specified in column 70, the respective numbers of bits specified in column 74). Each of the transceivers transmits via the respective channels assigned to it for data transmission, the respective data bit signals, as allocated in the tables 60, 62, by modulating the respective data bit signals with the respective carrier signal associated with the respective channel, and at the respective gain specified in column 76 for the respective channel.

As noted previously, transceiver 26 has table 60 which is the mirror image of table 62. That is, the actual bit allocations, channel bit loading sequence order (i.e., as specified in the rows of columns 70 and 72), and channel gains specified for transmission by transceiver 34 are the same as those specified for reception by transceiver 26 and correspondingly for reception by transceiver 34 and transmission by transceiver 26.

In table 62, the transmission gains assigned to the respective channels are identical to those specified for the respective channels in table 42. Also in table 62, the channels available for communication in system 1 are the same as those in table 42, and the respective numbers of bits allocated to the respective channels in table 62 are the same as the respective maximum numbers of bits allocated to the respective channels in table 42. A key difference between table 62 and 42 is columns 70 and 72 which together specify the order in which data bits are to be mapped to channels. The table 62 and its reordering columns (i.e., columns 70 and 72) are either communicated between transceivers during initialization or can be generated by each transceiver from table 42, if the transceivers use the same algorithm for generating the table 62 and reordering columns 70 and 72.

In accordance with this embodiment of the present invention, the channel bit loading sequence order specified in columns 70, 72 of table 62 is such that the number of respective channels (and also, therefore, carrier signals associated with the channels) that are allocated bit signals belonging to more than one respective symbol of the data streams 100, 200 is minimized. More particularly, in table 62, during a respective data transmission period, respective bit signals allocated to respective channels are comprised in only a single respective symbol.

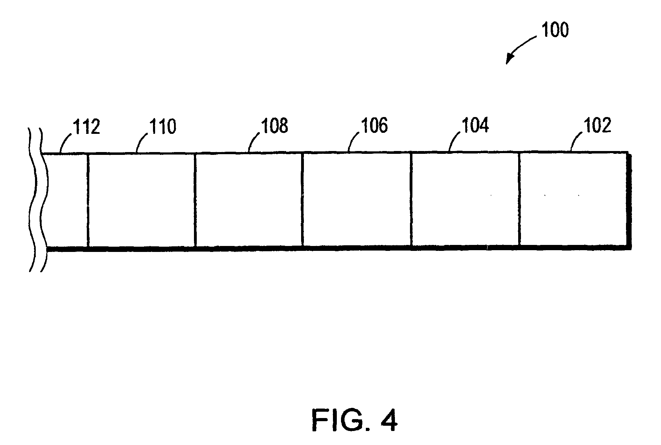

For example, if one assumes for purposes of illustration that data bits of the stream 100 illustrated in Figure 4 are being transmitted during the first transmission period following initialization of the table 62, and each symbol has a size of eight bits, then in accordance with actual bit loading scheme of table 62, channel 2 is allocated all of the bits of the first symbol 102 of stream 100. Channel 9 is allocated all of the bits of the second symbol 104 of stream 100. Channel 3 is allocated 7 bits of the third symbol 106 of stream 100, and the remaining bit of 106 of stream 100 is allocated to channel 7. Channel 6 is allocated 6 bits of the fourth symbol 108 of stream 100, and the remaining two bits of the 108 is allocated to channel 5, and so forth, so as to ensure that in accordance with the bit loading specified in table 62, each of the channels is assigned bits from only a single respective symbol during a respective data transmission period.

Of course, as will be appreciated by those skilled in the art, depending upon the size of the symbols, and the maximum numbers of bits that can be transmitted via the respective channels at the respective channel gains specified in columns 52, 54 of table 42, a channel bit loading sequence order, using such maximum numbers of bits and gains, may not exist wherein each of the channels is assigned bits from only a single respective symbol during a respective data transmission period. Thus, it may be necessary to adjust one or more of the respective carrier or channel transmission gains G1, G2, etc., and/or SNR margins (i.e., the predetermined amount by which the actual SNR of a given channel exceeds a minimum SNR required for transmission of a number of bits allocated to channel with the desired bit error rate probability) so as to, in effect, change the maximum numbers of bits that are permitted to be transmitted via the respective channel or channels associated with the gains and/or SNR margins (consistent with the aforesaid types of prevailing conditions on the channel, desired transmission error rate probability, etc.) in a manner that permits each of the channels to be assigned bits from only a single respective symbol during a respective data transmission period. The amounts by which the channel transmission gains and/or SNR margins are adjusted to achieve this result may be determined empirically based upon the information derived and stored in the transceivers' memories as part of the "training" period at initialization of communications.

As an example, consider the case where in bit allocation table 42 carriers numbered 2 and 9 do not have 8 respective bits allocated to them, but instead have 7 and 9 allocated to them respectfully. In this case, it would not be possible to order the loading of the channels in such a way that each of the channels is assigned bits from only a single respective symbol during a respective data transmission period. This problem can be solved if different channel transmission gains (e.g., different from G2 and G9) are used to change the numbers of bits allocated to these channels corresponding to these gains. For example, in most cases an additional 3 dB of transmission gain will enable the transmission of one additional bit on a channel with the same desired bit error rate probability. Therefore, if G2 is increased to G2+3 dB, and G9 is decreased to G9-3 dB, then channels 2 and 9 may each carry 8 bits (as in the original table 42) without changing the bit error rate probability of these channels, thereby enabling the use of a channel bit loading sequence order wherein each of the channels is assigned bits from only a single respective symbol during a respective data transmission period.

Alternatively, fixed gain adjustments and/or SNR margin adjustments (e.g., of about 3.4 dB) may be applied to those channels that otherwise would be allocated bits from more than one respective symbol during a respective transmission period. Ideally, although not necessarily, the adjustments in channel transmission gains and/or SNR margins should be made in such a way as to ensure that the system 1 remains in compliance with applicable industry DSL channel transmission gain and power margin standards, which standards are well known to those skilled in the art. For example, such standards are disdosed in the ITU Standard G.992.2 and ANSI Standard T.413, which are incorporated herein by reference in their entireties.

Of course, it should be appreciated that the processor of the transceiver charged with determining the actual bit loading tables 60, 62 may use any combination of the aforesaid techniques to best achieve the minimization of the number channels allocated bits from more than one symbol. That is, during the "training" period at initialization of communications, that processor may exhaustively search through the various possibilities in terms of channel bit loading sequence orders, and/or channel transmission gain and/or SNR adjustments to arrive at an "optimal" result for communications based upon predetermined optimization criteria (e.g., such that the SNR margin adjustment is approximately equal across all channels and the number of channels being allocated bits from multiple symbols during a given transmission period is minimized).

For example, although the system 1 has been shown as comprising splitters 24, 30, splitters 24, 30 may instead be wholly eliminated from system 1.

Other modifications are also possible. For example, rather than communicating both tables 42, 62 via line 14, only the second table 62 may be so communicated.

Likewise, rather than generating two tables 42, 62, only a single table 62 need be generated by modem 34 during training. Accordingly, the present invention is intended to embrace all such alternatives, modifications, and variations as may be apparent to those skilled in the art and encompassed within the hereinafter appended daims.

## Claims

1. A multicarrier data modulation method comprising the steps of:
providing a plurality of carrier signals for use in modulating date bit signals of a serial input data stream (100), **characterized in that** a predetermined number of the data bit signals being mapped into each one of a plurality of error correction symbols (102,104...) before the data bit signals are modulated on the carrier signals, the number of data bit signals that can be modulated on at least one carrier signal being fewer than the predetermined number of data bit signals that are mapped to each error correction symbol, each of said carrier signals being associated with a respective transmission channel; and
allocating the data bit signals among the carrier signals for modulation using the carrier signals, the allocating of the bit signals among the carrier signals based upon the mapping of the data bit signals to the error correction symbols and the number of carrier signals that modulate data bit signals belonging to different error correction symbols during a transmission period.

2. A method according to claim 1, wherein the allocating of the data bit signals is also based upon an adjustment of a signal to noise margin of at least one channel.

3. A method according to claim 2, wherein the adjustment is carried out in such a way as to permit the at least one channel to be assigned data bit signals from only a single error correction symbol during a transmission period.

4. A method according to one of the claims 1 to 3, wherein the data bit signals are allocated among the carrier signals in accordance with a carrier signal allocation sequence order, the order being such that the number of carrier signals that modulate data bits signals belonging to different error correction symbols is minimized.

5. A method according to one of the claims 1 to 4, wherein the actual signal to noise ratio of the at least one channel is approximately the sum of the margin and a minimum required signal to noise ratio for the at least one channel, the data bit signals to be transmitted via the at least one channel belong to more than one error correction symbol during the transmission period, and the adjustment comprises increasing the margin so as to reduce the number of data bit signals that may be transmitted by the at least one channel while decreasing an error rate probability associated with bit signal transmission via the at least one channel.

6. A method according to claim 1, wherein the allocating of the data bit signals among the carrier signal is being carried out in such a way as to minimize the number of carrier signals that modulate data bit signals belonging to different error correction symbols during a transmission period.

7. A method according to claim 6, wherein each error correction symbol is a forward error correction coding symbol.

8. A method according to claims 6 or 7, wherein each error correction symbol has a size of one byte.

9. A method according to one of the claims 6 to 8, wherein, during the transmission period, for each carrier signal, all the data bit signals allocated to that carrier signal are mapped to one error correction symbol.

10. A method according to one of the claims 6 to 9, wherein the step of allocating the data bit signals among the carrier signals comprises determining maximum numbers of data bit signals that may be transmitted via the channels without exceeding a desired maximum probability of bit transmission error, and allocating the data bit signals to the carrier signals in accordance with a carrier signal allocation sequence order, the order being such that the number of carrier signals that modulate data bit signals belonging to different error correction symbols is minimized.

11. A method according to one of the claims 6 to 10, wherein the step of allocating the data bit signals among the carrier signals comprises adjusting a transmission gain of at least one channel so as to change to a different number of data bit signals a maximum number of data bit signals that can be transmitted via the at least one channel without exceeding a desired maximum probability of bit transmission error, and allocating an actual number of data bit signals to the carrier signal associated with the at least one channel in accordance with the different number.

12. A method according to one of the claims 6 to 11, wherein the step of allocating the data bit signals among the carrier signals also comprises adjusting a transmission gain of at least one channel so as to change to a different number of data bit signals a maximum number of bit signals that can be transmitted via the at least one channel without exceeding the desired maximum probability of bit transmission error, and allocating an actual number of bit signals to the carrier signal associated with the at least one channel in accordance with the different number.

13. A method according to claim 1, wherein the carrier signals are subchannels, further comprising the steps of:
placing the subchannels into groups comprised of one or more subchannels based on the number of data bit signals that the subchannels can modulate, each group of subchannels being capable of modulating the predetermined number of data bits signals that are mapped to each error correction symbol; and
allocating the data bit signals among the groups of subchannels such that data bit signals that are mapped to different error correction symbols are not modulated on the same subchannel, thereby minimizing the number of error correction symbols that are affected by an error occurring on any given subchannel during a transmission period.

14. The method of claim 13 further comprising determining a subchannel order in which to allocate the data bit signals of the error correction symbols to the subchannels.

15. The method of claims 13 or 14 further comprising adjusting the number of data bit signals that can be carried by a given subchannel.

16. The method of claim 15 wherein adjusting the number of data bit signals comprises adjusting the transmission gain for the given subchannel.

17. The method of claim 15 wherein adjusting the number of data bit signals comprises adjusting the signal-to-noise ratio for the given subchannel.

18. The method of one of the claims 14 to 17 wherein the order is based upon the bit size of the error correction symbol and the number of data bit signals that each subchannel can carry.

19. The method of one of the claims 13 to 18 further comprising adjusting the number of data bit signals that can be carried by a given subchannel.

20. The method of claim 19 wherein adjusting the number of data bit signals comprises adjusting the transmission gain for the given subchannel.

21. The method of claim 19 wherein adjusting the number of data bit signals comprises adjusting the signal-to-noise ratio for the given subchannel.

22. The method of one of the claims 13 to 21 wherein the allocating occurs during initialization of a multicarrier transceiver.

23. Computer-readable memory (52) comprising computer-executable program instructions that when executed cause:
providing a plurality of carrier signals for use in modulating data bit signals of a serial input data stream (100), **characterized in that** a predetermined number of the data bit signals being mapped into each one of a plurality of error correction symbols (102, 104...) before the data bit signals are modulated on the carrier signals, the number of data bit signals that can be modulated on at least one carrier signal being fewer than the predetermined number of data bit signals that are mapped to each error correction symbol, each of said carrier signals being associated with a respective transmission channel; and
allocating of the data bit signals among the carrier signals based on the mapping of the data bit signals to the error correction symbols for modulation using the carrier signals, the allocating of the data bit signals among the carrier signals being carried out in such a way as to minimize the number of carrier signals that modulate data bit signals belonging to different error correction symbols during a transmission period.

24. Memory according to claim 23, wherein each error correction symbol is a forward error correction coding symbol.

25. Memory according to claims 23 or 24, wherein each error correction symbol has a size of one byte:

26. Memory according to one of the claims 23 to 25, wherein during the transmission period, for each carrier signal, all the data bit signals allocated to that carrier signal are mapped to one error correction symbol.

27. Memory according to one of the claims 23 to 26, wherein the allocating of the data bit signals among the carrier signals comprises determining maximum numbers of bit signals that may be transmitted via the channels without exceeding a desired maximum probability of bit transmission error, and allocating the maximum numbers of data bit signals to the carrier signals in accordance with a carrier signal allocation sequence order, the order being such that the number of carrier signals that are allocated data bit signals belonging to more than one error correction symbol during the transmission period is minimized.

28. Memory according to one of the claims 23 to 27, wherein the allocating of the data bit signals among the carrier signals comprises adjusting a transmission gain of at least one channel so as to change to a different number of data bit signals a maximum number of data bit signals that can be transmitted via the at least one channel without exceeding a desired maximum probability of bit transmission error, and allocating an actual number of data bit signals to the carrier signal associated with the at least one channel in accordance with the different number.

29. Memory according to one of the claims 23 to 28, wherein the data bit signals are allocated among the carrier signals in accordance with a carrier signal allocation sequence order, the order being such that the number of carrier signals that modulate data bits signals belonging to different error correction symbols is minimized.

30. A multicarrier data modulation system (1) comprising:
a signal generator (34) being capable of generating a plurality of carrier signals for use in modulating data bit signals of a serial input data stream (100), **characterized in that** a predetermined number of the data bit signals being mapped into each one of a plurality of error correction
symbols (102,104...) before the data bit signals are modulated on the carrier signals, the number of data bit signals that can be modulated on at least one carrier signal being fewer than the predetermined number of data bit signals that are mapped to each error correction symbol, each of said carrier signals being associated with a respective transmission channel; and
an allocation mechanism being capable of allocating the data bit signals among the carrier signals based on the mapping of the data bit signals to the error correction symbols for modulation using the carrier signals, the mechanism allocating of the data bit signals among the carrier signals in such a way as to minimize the number of carrier signals that modulate data bit signals belonging to different error correction symbols during a transmission period.

31. A system according to claim 30, wherein each error correction symbol is a forward error correction coding symbol.

32. A system according to claims 30 or 31, wherein each error correction symbol has a size of one byte.

33. A system according to one of the claims 30 to 32, wherein during the transmission period, for each carrier signal, all the data bit signals allocated to that carrier signal are mapped to one error correction symbol.

34. A system according to one of the claims 30 to 33, wherein the mechanism is capable to determine maximum numbers of data bit signals that may be transmitted via the channels without exceeding a desired maximum probability of bit transmission error, and allocating the maximum number of data bit signals to the carrier signals in accordance with a carrier signal allocation sequence order, the order being such that the number of carrier signals that are allocated data bit signals belonging to different error correction symbols during transmission period is minimized.

35. A system according to one of the claims 30 to 34, wherein the system is also capable to adjust a transmission gain of at least one channel so as to change to a different number of data bit signals a maximum number of data bit signals that can be transmitted via the at least one channel without exceeding a desired maximum probability of bit transmission error, and the mechanism is capable to allocate an actual number of data bit signals to the carrier signals associated with the at least one channel in accordance with the different number.

36. A system according to one of the claims 30 to 35, wherein the mechanism is capable to allocate the data bit signals to the carrier signals in accordance with a carrier signal allocation sequence order, the order being such that the number of carrier signals that modulate data bit signals belonging to different error correction symbols during the transmission period is minimized.

## Patentansprüche

1. Mehrträgerdatenmodulationsverfahren, das folgende Schritte umfasst:
eine Vielzahl von Trägersignalen zur Verwendung bei der Modulierung von Datenbitsignalen eines seriellen Eingangsdatenstroms (100) bereitzustellen, **dadurch gekennzeichnet, dass** eine vorbestimmte Anzahl der Datenbitsignale in jeweils einem von einer Vielzahl von Fehlerkorrektursymbolen (102, 104 ...) abgebildet wird, bevor die Datenbitsignale auf die Trägersignale moduliert werden, wobei die Anzahl von Datenbitsignalen, die auf mindestens ein Trägersignal moduliert werden können, geringer ist als die vorbestimmte Anzahl von Trägerbitsignalen, die in jedem Fehlerkorrektursymbol abgebildet sind, wobei jedes der Trägersignale einem jeweiligen Übertragungskanal zugeordnet ist: und
während einer Übertragungsdauer die Datenbitsignale zwischen den Trägersignalen zur Modulation unter Verwendung der Trägersignale zuzuordnen, wobei die Zuordnung der Bitsignale zwischen den Trägersignalen auf der Abbildung der Datenbitsignale in den Fehlerkorrektursymbolen basiert, und die Anzahl von Trägersignalen, die Datenbitsignale modulieren, zu unterschiedlichen Fehlerkorrektursymbolen gehören.

2. Verfahren nach Anspruch 1, wobei das Zuordnen der Datenbitsignale auch auf einer Einstellung einer Rauschabstandsspanne mindestens eines Kanals beruht.

3. Verfahren nach Anspruch 2, wobei die Einstellung derart ausgeführt wird, dass der mindestens eine Kanal während einer Übertragungsdauer Datenbitsignale von nur einem einzigen Fehlerkorrektursymbol zugewiesen bekommt.

4. Verfahren nach einem der Ansprüche 1 bis 3, wobei die Datenbitsignale entsprechend einer Trägersignalzuordnungssequenzreihenfolge zwischen den Trägersignalen zugeordnet werden, wobei die Reihenfolge dergestalt ist, dass die Anzahl von Trägersignalen, die zu unterschiedlichen Fehlerkorrektursymbolen gehörende Datenbitsignale modulieren, minimiert ist.

5. Verfahren nach einem der Ansprüche 1 bis 4, wobei der tatsächliche Rauschabstand des mindestens einen Kanals ungefähr die Summe der Spanne und ein für den mindestens einen Kanal erforderlicher Mindestrauschabstand ist, die während der Übertragungsdauer über den mindestens einen Kanal zu übertragenden Datenbitsignale zu mehr als einem Fehlerkorrektursymbol gehören, und die Einstellung umfasst, die Spanne zu vergrößern, um die Anzahl der Datenbitsignale, die durch den mindestens einen Kanal übertragen werden können, zu reduzieren, während eine mit der Bitsignalübertragung über den mindestens einen Kanal zusammenhängende Fehlerratenwahrscheinlichkeit gesenkt wird.

6. Verfahren nach Anspruch 1, wobei das Zuordnen der Datenbitsignale zwischen den Trägersignalen derart durchgeführt wird, dass die Anzahl von Trägersignalen, die zu unterschiedlichen Fehlerkorrektursymbolen gehörende Datenbitsignale modulieren, während einer Übertragungsdauer minimiert wird.

7. Verfahren nach Anspruch 6, wobei jedes Fehlerkorrektursymbol ein Vorwärtsfehlerkorrekturcodiersymbol ist.

8. Verfahren nach Anspruch 6 oder 7, wobei jedes Fehlerkorrektursymbol die Größe von einem Byte hat.

9. Verfahren nach einem der Ansprüche 6 bis 8, wobei während der Übertragungsdauer für jedes Trägersignal alle die Datenbitsignale, die diesem Trägersignal zugeordnet sind, in einem Fehlerkorrektursymbol abgebildet sind.

10. Verfahren nach einem der Ansprüche 6 bis 9, wobei der Schritt des Zuordnens der Datenbitsignale zwischen den Trägersignalen umfasst, die maximalen Anzahlen von Datenbitsignalen, die über die Kanäle übertragen werden können, ohne eine gewünschte maximale Bitübertragungsfehlerwahrscheinlichkeit zu überschreiten, zu bestimmen, und die Datenbitsignale entsprechend einer Trägersignalzuordnungssequenzreihenfolge den Trägersignalen zuzuordnen, wobei die Reihenfolge dergestalt ist, dass die Anzahl von Trägersignalen, die zu unterschiedlichen Fehlerkorrektursymbolen gehörende Datenbitsignale modulieren, minimiert ist.

11. Verfahren nach einem der Ansprüche 6 bis 10, wobei der Schritt des Zuordnens der Datenbitsignale zwischen den Trägersignalen umfasst, eine Übertragungsverstärkung mindestens eines Kanals so einzustellen, dass eine maximale Anzahl von Datenbitsignalen, die über den mindestens einen Kanal ohne eine gewünschte maximale Bitübertragungsfehlerwahrscheinlichkeit zu überschreiten übertragen werden können, auf eine andere Anzahl von Datenbitsignalen abgeändert wird, und eine tatsächliche Anzahl von Datenbitsignalen dem mit dem mindestens einen Kanal zusammenhängenden Trägersignal entsprechend der anderen Anzahl zuzuordnen.

12. Verfahren nach einem der Ansprüche 6 bis 11, wobei der Schritt des Zuordnens der Datenbitsignale zwischen den Trägersignalen auch umfasst, eine Übertragungsverstärkung mindestens eines Kanals so einzustellen, dass eine maximale Anzahl von Datenbitsignalen, die über den mindestens einen Kanal ohne eine gewünschte maximale Bitübertragungsfehlerwahrscheinlichkeit zu überschreiten übertragen werden können, auf eine andere Anzahl von Datenbitsignalen abgeändert wird, und eine tatsächliche Anzahl von Datenbitsignalen dem mit dem mindestens einen Kanal zusammenhängenden Trägersignal entsprechend der anderen Anzahl zuzuordnen.

13. Verfahren nach Anspruch 1, wobei die Trägersignale Unterkanäle sind, darüber hinaus folgende Schritte umfassend:
die Unterkanäle in aus einem Unterkanal oder mehreren Unterkanälen bestehende Gruppen basierend auf der Anzahl von Datenbitsignalen, die die Unterkanäle modulieren können, anzuordnen, wobei jede Gruppe von Unterkanälen in der Lage ist, die vorbestimmte Anzahl von Datenbitsignalen zu modulieren, die in jedem Fehlerkorrektursymbol abgebildet ist; und
die Datenbitsignale zwischen den Gruppen der Unterkanäle derart zuzuordnen, dass Datenbitsignale, die in unterschiedlichen Fehlerkorrektursymbolen abgebildet sind, nicht im selben Unterkanal moduliert werden, wodurch die Anzahl von Fehlerkorrektursymbolen, die von einem Fehler betroffen sind, der in einem bestimmten Unterkanal auftritt, während einer Übertragungsdauer minimiert wird.

14. Verfahren nach Anspruch 13, darüber hinaus umfassend, eine Unterkanalreihenfolge zu bestimmen, in der die Datenbitsignale der Fehlerkorrektursymbole den Unterkanälen zugeteilt werden sollen.

15. Verfahren nach Anspruch 13 oder 14, darüber hinaus umfassend, die Anzahl von Datenbitsignalen einzustellen, die von einem bestimmten Unterkanal übertragen werden können.

16. Verfahren nach Anspruch 15, wobei das Einstellen der Anzahl von Datenbitsignalen umfasst, die Übertragungsverstärkung für den bestimmten Unterkanal einzustellen.

17. Verfahren nach Anspruch 15, wobei das Einstellen der Anzahl von Datenbitsignalen umfasst, den Rauschabstand für den bestimmten Unterkanal einzustellen.

18. Verfahren nach einem der Ansprüche 14 bis 17, wobei die Reihenfolge auf der Bitgröße des Fehlerkorrektursymbols und der Anzahl von Datenbitsignalen beruht, die jeder Unterkanal übertragen kann.

19. Verfahren nach einem der Ansprüche 13 bis 18, darüber hinaus umfassend, die Anzahl von Datenbitsignalen einzustellen, die von einem bestimmten Unterkanal übertragen werden können.

20. Verfahren nach Anspruch 19, wobei das Einstellen der Anzahl von Datenbitsignale umfasst, die Übertragungsverstärkung für den bestimmten Unterkanal einzustellen.

21. Verfahren nach Anspruch 19, wobei das Einstellen der Anzahl von Datenbitsignalen umfasst, den Rauschabstand für den bestimmten Unterkanal einzustellen.

22. Verfahren nach einem der Ansprüche 13 bis 21, wobei das Zuordnen während der Initialisierung eines Mehrträger-Transceivers stattfindet.

23. Computerlesbarer Speicher (52) mit computerausführbaren Programmbefehlen, die, wenn sie ausgeführt werden, Folgendes veranlassen:
eine Vielzahl von Trägersignalen zur Verwendung bei der Modulierung von Datenbitsignalen eines seriellen Eingangsdatenstroms (100) bereitzustellen, **dadurch gekennzeichnet, dass** eine vorbestimmte Anzahl der Datenbitsignale in jeweils einem von einer Vielzahl von Fehlerkorrektursymbolen (102, 104 ...) abgebildet wird, bevor die Datenbitsignale auf die Trägersignale moduliert werden, wobei die Anzahl von Datenbitsignalen, die auf mindestens ein Trägersignal moduliert werden können, geringer ist als die vorbestimmte Anzahl von Datenbitsignalen, die in jedem Fehlerkörrektursymbol abgebildet sind, wobei jedes der Trägersignale an einen jeweiligen Übertragungskanal angeschlossen ist; und
während einer Übertragungsdauer die Datenbitsignale zwischen den Trägersignalen basierend auf der Abbildung der Datenbitsignale in den Fehlerkorrektursymbolen zur Modulation unter Verwendung der Trägersignale zuzuordnen, wobei das Zuordnen der Datenbitsignale zwischen den Trägersignalen derart ausgeführt wird, dass die Anzahl von Trägersignalen, die zu unterschiedlichen Fehlerkorrektursymbolen gehörende Datenbitsignale modulieren, minimiert wird.

24. Speicher nach Anspruch 23, wobei jedes Fehlerkorrektursymbol ein Vorwärtsfehlerkorrekturcodiersymbol ist.

25. Speicher nach Anspruch 23 oder 24, wobei jedes Fehlerkorrektursymbol die Größe von einem Byte hat.

26. Speicher nach einem der Ansprüche 23 bis 25, wobei während der Übertragungsdauer für jedes Trägersignal alle die Datenbitsignale, die diesem Trägersignal zuordnet sind, in einem Fehlerkorrektursymbol abgebildet sind.

27. Speicher nach einem der Ansprüche 23 bis 26, wobei das Zuordnen von Datenbitsignalen zwischen den Trägersignalen umfasst, die maximalen Anzahlen von Datenbitsignalen, die über die Kanäle übertragen werden können, ohne eine gewünschte maximale Bitübertragungsfehlerwahrscheinlichkeit zu überschreiten, zu bestimmen, und die maximalen Anzahlen von Datenbitsignalen entsprechend einer Trägersignalzuordnungssequenzreihenfolge den Trägersignalen zuzuordnen, wobei die Reihenfolge dergestalt ist, dass die Anzahl von Trägersignalen, die Datenbitsignale zugeordnet haben, die zu mehr als einem Fehlerkorrektursymbol gehören, während der Übertragungsdauer minimiert wird.

28. Speicher nach einem der Ansprüche 23 bis 27, wobei das Zuordnen von Datenbitsignalen zwischen den Trägersignalen umfasst, eine Übertragungsverstärkung mindestens eines Kanals so einzustellen, dass eine maximale Anzahl von Datenbitsignalen, die über den mindestens einen Kanal ohne eine gewünschte maximale Bitübertragungsfehler-Wahrscheinlichkeit zu überschreiten übertragen werden können, auf eine andere Anzahl von Datenbitsignalen abgeändert wird, und eine tatsächliche Anzahl von Datenbitsignalen dem mit dem mindestens einen Kanal zusammenhängenden Trägersignal entsprechend der anderen Anzahl zuzuordnen.

29. Speicher nach einem der Ansprüche 23 bis 28, wobei die Datenbitsignale entsprechend einer Trägersignalzuordnungssequenzreihenfolge zwischen den Trägersignalen zugeordnet werden, wobei die Reihenfolge dergestalt ist, dass die Anzahl von Trägersignalen, die zu unterschiedlichen Fehlerkorrektursymbolen gehörende Datenbitsignale modulieren, minimiert ist.

30. Mehrträgerdatenmodulationssystem (1), umfassend:
einen Signalgeber (34), der in der Lage ist, eine Vielzahl von Trägersignalen zur Verwendung bei der Modulierung von Datenbitsignalen eines seriellen Eingangsdatenstroms (100) zu erzeugen, **dadurch gekennzeichnet, dass** eine vorbestimmte Anzahl der Datenbitsignale in jeweils einem von einer Vielzahl von Fehlerkorrektursymbolen (102, 104 ...) abgebildet wird, bevor die Datenbitsignale auf die Trägersignale moduliert werden, wobei die Anzahl von Datenbitsignalen, die auf mindestens ein Trägersignal moduliert werden können, geringer ist als die vorbestimmte Anzahl von Trägerbitsignalen, die in jedem Fehlerkorrektursymbol abgebildet sind, wobei jedes zugeordnet angeschlossen ist; und
eine Zuordnungseinrichtung, die in der Lage ist, die Datenbitsignale während einer Übertragungsdauer zwischen den Trägersignalen basierend auf der Abbildung der Datenbitsignale in den Fehlerkorrektursymbolen zur Modulation unter Verwendung der Trägersignale zuzuordnen, wobei die Einrichtung die Datenbitsignale zwischen den Trägersignalen derart zuordnet, dass die Anzahl von Trägersignalen, die zu unterschiedlichen Fehlerkorrektursymbolen gehörende Datenbitsignale modulieren, minimiert wird.

31. System nach Anspruch 30, wobei jedes Fehlerkorrektursymbol ein Vorwärtsfehlerkorrekturcodiersymbol ist.

32. System nach Anspruch 30 oder 31, wobei jedes Fehlerkorrektursymbol die Größe von einem Byte hat.

33. System nach einem der Ansprüche 30 bis 32, wobei während der Übertragungsdauer für jedes Trägersignal alle die Datenbitsignale, die diesem Trägersignal zuordnet sind, in einem Fehlerkorrektursymbol abgebildet werden.

34. System nach einem der Ansprüche 30 bis 33, wobei die Einrichtung in der Lage ist, die maximalen Anzahlen von Datenbitsignalen, die über die Kanäle übertragen werden können, ohne eine gewünschte maximale Bitübertragungsfehlerwahrscheinlichkeit zu überschreiten, zu bestimmen, und die Datenbitsignale entsprechend einer Trägersignalzuordnungssequenzreihenfolge den Trägersignalen zuzuordnen, wobei die Reihenfolge dergestalt ist, dass die Anzahl von Trägersignalen, die Datenbitsignale zugeordnet haben, die zu unterschiedlichen Fehlerkorrektursymbolen gehören, während der Übertragungsdauer minimiert ist.

35. System nach einem der Ansprüche 30 bis 34, wobei das System auch in der Lage ist, eine Übertragungsverstärkung mindestens eines Kanals so einzustellen, dass eine maximale Anzahl von Datenbitsignalen, die über den mindestens einen Kanal ohne eine gewünschte maximale Bitübertragungsfehlerwahrscheinlichkeit zu überschreiten übertragen werden können, auf eine andere Anzahl von Datenbitsignalen abgeändert wird, und die Einrichtung in der Lage ist, eine tatsächliche Anzahl von Datenbitsignalen den mit dem mindestens einen Kanal zusammenhängenden Trägersignalen entsprechend der anderen Anzahl zuzuordnen.

36. System nach einem der Ansprüche 30 bis 35, wobei die Einrichtung in der Lage ist, die Datenbitsignale entsprechend einer Trägersignalzuordnungssequenzreihenfolge zwischen den Trägersignalen zuzuordnen, wobei die Reihenfolge dergestalt ist, dass die Anzahl von Trägersignalen, die zu unterschiedlichen Fehlerkorrektursymbolen gehörende Datenbitsignale modulieren, während der Übertragungsdauer minimiert ist.

## Revendications

1. Procédé de modulation de données sur des ondes porteuses multiples, comprenant les étapes consistant à :
fournir une pluralité de signaux porteurs à utiliser pour moduler les signaux de bits de données d'un flux de données d'entrée en série (100), **caractérisé en ce qu'**un nombre prédéterminé des signaux de bits de données sont représentés dans chacun d'une pluralité de symboles de correction d'erreurs (102, 104, ...) avant que les signaux de bits de données soient modulés sur les signaux porteurs, le nombre de signaux de bits de données qui peuvent être modulés sur au moins un signal porteur étant inférieur au nombre prédéterminé de signaux de bits de données qui sont représentés sur chaque symbole de correction d'erreurs, chacun desdits signaux porteurs étant associé à un canal de transmission respectif ; et
allouer les signaux de bits de données parmi les signaux porteurs pour moduler en utilisant les signaux porteurs, l'allocation des signaux de bits de données parmi les signaux porteurs se basant sur la représentation des signaux de bits de données sur les symboles de correction d'erreurs et le nombre des signaux porteurs qui modulent des signaux de bits de données appartenant à différents symboles de correction d'erreurs pendant une période de transmission.

2. Procédé selon la revendication 1, dans lequel l'allocation des signaux de bits de données est aussi basée sur un ajustement d'une marge signal/bruit d'au moins un canal.

3. Procédé selon la revendication 2, dans lequel l'ajustement est effectué de quelle manière qu'il permet d'attribuer audit au moins un canal des signaux de bits de données provenant seulement d'un unique symbole de correction d'erreurs pendant une période de transmission.

4. Procédé selon l'une des revendications 1 à 3, dans lequel les signaux de bits de données sont alloués parmi les signaux porteurs en accord avec un ordre de séquence d'allocation de signaux porteurs, l'ordre étant tel que le nombre des signaux porteurs qui modulent des signaux de bits de données appartenant à différents symboles de correction d'erreurs est minimisé.

5. Procédé selon l'une des revendications 1 à 4, dans lequel le rapport réel signal/bruit dudit au moins un canal est approximativement la somme de la marge et d'un rapport signal/bruit minimum requis pour ledit au moins un canal, les signaux de bits de données à transmettre via ledit au moins un canal appartenant à plus d'un symbole de correction d'erreurs pendant la période de transmission, et l'ajustement comprend d'augmenter la marge de façon à réduire le nombre des signaux de bits de données qui peuvent être transmis par ledit au moins un canal tout en diminuant une probabilité de taux d'erreurs associée à la transmission des signaux de bits via au moins ledit au moins un canal.

6. Procédé selon la revendication 1, dans lequel l'allocation des signaux de bits de données parmi les signaux porteurs est effectuée de manière à minimiser le nombre de signaux porteurs qui modulent des signaux de bits de données appartenant à différents symboles de correction d'erreurs pendant une période de transmission.

7. Procédé selon la revendication 6, dans lequel chaque symbole de correction d'erreur est un symbole de codage de correction d'erreur en avance.

8. Procédé selon l'une ou l'autre des revendications 6 et 7, dans lequel chaque symbole de correction d'erreur a une taille d'un octet.

9. Procédé selon l'une des revendications 6 à 8, dans lequel, pendant la période de transmission et pour chaque signal porteur, tous les signaux de bits de données alloués à ce signal porteur sont représentés sur un symbole de correction d'erreur.

10. Procédé selon l'une des revendications 6 à 9, dans lequel l'étape d'allocation des signaux de bits de données parmi les signaux porteurs comprend de déterminer des nombres maximum de signaux de bits de données qui peuvent être transmis via les canaux sans excéder une probabilité maximum désirée d'erreurs de transmission de bits, et l'allocation des signaux de bits de données aux signaux porteurs en accord avec un ordre de séquence d'allocation de signal porteur, l'ordre étant tel que le nombre de signaux porteurs qui modulent des signaux de bits de données appartenant à différents symboles de correction d'erreurs est minimisé.

11. Procédé selon l'une des revendications 6 à 10, dans lequel l'étape d'allocation des signaux de bits de données parmi les signaux porteurs comprend d'ajuster un gain de transmission d'au moins un canal de manière à changer, vers un nombre différent de signaux de bits de données, un nombre maximum de signaux de bits de données que l'on peut transmettre via ledit au moins un canal sans excéder une probabilité maximum désirée d'erreurs de transmission de bits, et d'allouer un nombre réel de signaux de bits de données au signal porteur associé audit au moins un canal en accord avec le nombre différent.

12. Procédé selon l'une des revendications 6 à 11, dans lequel l'étape d'allocation des signaux de bits de données parmi les signaux porteurs comprend aussi d'ajuster un gain de transmission d'au moins un canal de manière à changer, vers un nombre différent de signaux de bits de données, un nombre maximum de signaux de bits qui peuvent être transmis avec ledit au moins un canal sans excéder la probabilité maximum désirée d'erreurs de transmission de bits, et d'allouer un nombre réel de signaux de bits au signal porteur associé audit au moins un canal en accord avec le nombre différent.

13. Procédé selon la revendication 1, dans lequel les signaux porteurs sont des sous-canaux, comprenant en outre les étapes consistant à :
placer les sous-canaux en groupes comprenant un ou plusieurs sous-canaux en se basant sur le nombre de signaux de bits de données que les sous-canaux peuvent moduler, chaque groupe de sous-canaux étant capable de moduler le nombre prédéterminé de signaux de bits de données qui sont représentés sur chaque symbole de correction d'erreur ; et
allouer les signaux de bits de données parmi les groupes de sous-canaux, de sorte que les signaux de bits de données qui sont représentés sur différents symboles de correction d'erreurs ne sont pas modulés sur le même sous-canal, minimisant grâce à cela le nombre de symboles de correction d'erreurs qui sont affectés par une erreur se produisant sur un quelconque sous-canal donné pendant une période de transmission.

14. Procédé selon la revendication 13, comprenant en outre de déterminer un ordre des sous-canaux dans lequel on alloue les signaux de bits de données des symboles de correction d'erreurs aux sous-canaux.

15. Procédé selon l'une ou l'autre des revendications 13 et 14, comprenant en outre d'ajuster le nombre des signaux de bits de données qui peuvent être portés par un sous-canal donné.

16. Procédé selon la revendication 15, dans lequel l'ajustement du nombre de signaux de bits de données comprend d'ajuster le gain de transmission pour le sous-canal donné.

17. Procédé selon la revendication 15, dans lequel l'ajustement du nombre de signaux de bits de données comprend d'ajuster le rapport signal/bruit pour le sous-canal donné.

18. Procédé selon l'une des revendications 14 à 17, dans lequel l'ordre est basé sur la taille de bits du symbole de correction d'erreurs et sur le nombre de signaux de bits de données que chaque sous-canal peut porter.

19. Procédé selon l'une des revendications 13 à 18, comprenant en outre d'ajuster le nombre de signaux de bits de données qui peuvent être portés par un sous-canal donné.

20. Procédé selon la revendication 19, dans lequel l'ajustement du nombre de signaux de bits de données comprend d'ajuster le gain de transmission pour le sous-canal donné.

21. Procédé selon la revendication 19, dans lequel l'ajustement du nombre de signaux de bits de données comprend d'ajuster le rapport signal/bruit pour le sous-canal donné.

22. Procédé selon l'une des revendications 13 à 21, dans lequel l'allocation se produit pendant l'initialisation d'un émetteur/récepteur à ondes porteuses multiples.

23. Mémoire lisible par ordinateur (52) comprenant des instructions de programmes exécutables par un ordinateur qui, lorsqu'elles sont exécutées, ont pour effet :
de fournir une pluralité de signaux porteurs destinés à être utilisés pour moduler des signaux de bits de données d'un flux de données d'entrée en série (100), **caractérisée en ce qu'**un nombre prédéterminé des signaux de bits de données sont représentés dans chacun d'une pluralité de symboles de correction d'erreurs (102, 104, ...) avant que les signaux de bits de données soient modulés sur les signaux porteurs, le nombre de signaux de bits de données qui peuvent être modulés sur au moins un signal porteur étant inférieur au nombre prédéterminé de signaux de bits de données qui sont représentés sur chaque symbole de correction d'erreur, chacun desdits signaux porteurs étant associé à un canal de transmission respectif ; et
d'allouer les signaux de bits de données parmi les signaux porteurs en se basant sur la représentation des signaux de bits de données sur les symboles de correction d'erreurs pour la modulation utilisant les signaux porteurs, l'allocation des signaux de bits de données parmi les signaux porteurs étant effectuée de manière à minimiser le nombre des signaux porteurs qui modulent des signaux de bits de données appartenant à différents symboles de correction d'erreurs pendant une période de transmission.

24. Mémoire selon la revendication 23, dans lequel chaque symbole de correction d'erreur est un symbole de codage de correction d'erreur en avance.

25. Mémoire selon l'une ou l'autre des revendications 23 et 24, dans lequel chaque symbole de correction d'erreur a une taille d'un octet.

26. Mémoire selon l'une des revendications 23 à 25, dans lequel, pendant la période de transmission et pour chaque signal porteur, tous les signaux de bits de données alloués à ce signal porteur sont représentés sur un symbole de correction d'erreurs.

27. Mémoire selon l'une des revendications 23 à 26, dans laquelle l'allocation des signaux de bits de données parmi les signaux porteurs comprend de déterminer des nombres maximum de signaux de bits qui peuvent être transmis via les canaux sans excéder une probabilité maximum désirée d'erreurs de transmission de bits, et d'allouer les nombres maximum de signaux de bits aux signaux porteurs en accord avec un ordre de séquence d'allocation de signaux porteurs, l'ordre étant tel que le nombre de signaux porteurs qui sont alloués aux signaux de bits de données appartenant à plus d'un symbole de correction d'erreur pendant la période de transmission est minimisé.

28. Mémoire selon l'une des revendications 23 à 27, dans lequel l'allocation des signaux de bits de données parmi les signaux porteurs comprend d'ajuster un gain de transmission d'au moins un canal de façon à changer, vers un nombre différent de signaux de bits de données, un nombre maximum de signaux de bits de données qui peuvent être transmis via ledit au moins un canal sans excéder une probabilité maximum désirée d'erreurs de transmission de bits, et d'allouer un nombre réel de signaux de bits de données au signal porteur associé audit au moins un canal en accord avec le nombre différent.

29. Mémoire selon l'une des revendications 23 à 28, dans lequel les signaux de bits de données sont alloués parmi les signaux porteurs en accord avec un ordre de séquence d'allocation de signaux porteurs, l'ordre étant tel que le nombre de signaux porteurs qui modulent des signaux de bits de données appartenant à différents symboles de correction d'erreurs est minimisé.

30. Système de modulation de données sur des ondes porteuses multiples (1), comprenant:
un générateur de signal (34) capable de générer une pluralité de signaux porteurs destinés à être utilisés pour moduler des signaux de bits de données d'un flux de données d'entrée en série (100), **caractérisé en ce qu'**un nombre prédéterminé des signaux de bits de données sont représentés dans chacun d'une pluralité de symboles de correction d'erreurs (102, 104, ...) avant que les signaux de bits de données soient modulés sur les signaux porteurs, le nombre de signaux de bits de données qui peuvent être modulés sur au moins un signal porteur étant inférieur au nombre prédéterminé de signaux de bits de données qui sont représentés sur chaque symbole de correction d'erreur, chacun desdits signaux porteurs étant associé à un canal de transmission respectif ; et
un mécanisme d'allocation capable d'allouer les signaux de bits de données parmi les signaux porteurs en se basant sur la représentation des signaux de bits de données sur les symboles de correction d'erreurs pour la modulation utilisant les signaux porteurs, le mécanisme allouant les signaux de bits de données parmi les signaux porteurs de manière à minimiser le nombre de signaux porteurs qui modulent des signaux de bits de données appartenant à des symboles de correction d'erreurs différents pendant une période de transmission.

31. Système selon la revendication 30, dans lequel chaque symbole de correction d'erreur est un symbole de codage de correction d'erreur en avance.

32. Système selon l'une ou l'autre des revendications 30 et 31, dans lequel chaque symbole de correction d'erreur a une taille d'un octet.

33. Système selon l'une des revendications 30 à 32, dans lequel, pendant la période de transmission et pour chaque signal porteur, tous les signaux de bits de données alloués à ce signal porteur sont représentés sur un symbole de correction d'erreur.

34. Système selon l'une des revendications 30 à 33, dans lequel le mécanisme est capable de déterminer des nombres maximum de signaux de bits de données qui peuvent être transmis via les canaux sans excéder une probabilité maximum désirée d'erreurs de transmission de bits, et d'allouer le nombre maximum de signaux de bits de données aux signaux porteurs en accord avec un ordre de séquence d'allocation de signaux porteurs, l'ordre étant tel que le nombre de signaux porteurs qui sont alloués à des signaux de bits de données appartenant à différents symboles de correction d'erreurs pendant la période de transmission est minimisé.

35. Système selon l'une des revendications 30 à 34, dans lequel le système est également capable d'ajuster un gain de transmission d'au moins un canal de manière à changer, vers un nombre différent de signaux de bits de données, un nombre maximum de signaux de bits de données qui peuvent être transmis via ledit au moins un canal sans excéder une probabilité maximum désirée d'erreurs de transmission de bits, et le mécanisme est capable d'allouer un nombre réel de signaux de bits de données aux signaux porteurs associés audit au moins un canal en accord avec le nombre différent.

36. Système selon l'une des revendications 30 à 35, dans lequel le mécanisme est capable d'allouer les signaux de bits de données aux signaux porteurs en accord avec un ordre de séquence d'allocation de signal porteur, l'ordre étant tel que le nombre de signaux porteurs qui modulent des signaux de bits de données appartenant à des symboles de correction d'erreurs différents pendant la période de transmission est minimisé.
